# EUROPEAN PATENT SPECIFICATION

(11) **EP 1 158 379 B1**
(45) Date of publication and mention of the grant of the patent: **23.01.2008**
(21) Application number: 01112602.6
(22) Date of filing: 23.05.2001
(51) Int. Cl.: G05B 19/418

(54) **Print schedule planning method, print schedule planning system and print schedule planning program storage medium**
Verfahren und System zur Druckablaufplannung, Speichermedium für ein Druckablaufplannungsprogramm
Méthode et système de planification de déroulement d'impression, milieu de stockage de programme de planification de déroulement d'impression

(30) Priority: 25.05.2000 JP 2000155115
(43) Date of publication of application: 28.11.2001
(73) Proprietor: FUJIFILM Corporation, Minato-ku Tokyo (JP)
(72) Inventor: Honda, Hachirou, c/o Fuji Photo Film Co., Ltd., Ashigarakami-gun, Kanagawa 258-8538 (JP)
(74) Representative: Klunker . Schmitt-Nilson . Hirsch

(56) References cited:
- PATENT ABSTRACTS OF JAPAN vol. 1996, no. 10, 31 October 1996 (1996-10-31) & JP 08 147366 A (SUMITOMO METAL IND LTD), 7 June 1996 (1996-06-07)
- PATENT ABSTRACTS OF JAPAN vol. 010, no. 330 (P-514), 11 November 1986 (1986-11-11) & JP 61 136161 A (MITSUBISHI ELECTRIC CORP), 24 June 1986 (1986-06-24)

## Description

### BACKGROUND OF THE INVENTION

### Field of the Invention

The present invention relates to a print schedule planning method for planning a schedule of printing processes, a print schedule planning system and a print schedule planning program storage medium.

### Description of the Related Art

Generally, in a printing industry, the percentage of the cost of equipment for a printing machine in the total of print costs is extremely high. For this reason, it is an important subject for the printing industry how the rate of operation is increased to reduce the print cost. Thus, from a viewpoint of the process management, it is desired to establish a method of making the optimum schedule plan, with printing processes as leading part.

As a method of making a schedule plan, for example, Japanese Patent Laid Open Gazette Hei.8-147366 discloses a production planning apparatus comprising means for inputting an amount of order and the date of delivery, means for storing the necessary time for each process and the maximum processing amount per unit time, and means for determining the schedule for each process going back from the final process to the initial process.

Further, Japanese Patent Laid Open Gazette Sho.61-136161 discloses a process planning system comprising first means for inputting processing time for each of components of a variety, second means for inputting an instruction date of manufacturing start of components and an instruction date of manufacturing completion of components, means for inputting an operating time of a factory, means for computing the shortest time and the longest time required for producing only the component of interest, third means for inputting the process start date and the process termination date, and means for making a processing process plan giving component less in time priority in accordance with information entered from the first to third means.

However, according to the conventional schedule plan, with respect to the process of one order-object, a schedule plan is made upon selection of either one of a fastest-schedule scheme and a latest-schedule scheme. The fastest-schedule scheme is of forming a schedule in order of higher priority of process in practice while making sure of a resource. The latest-schedule scheme is of forming a schedule in turn from the later process to the former process counting backward from the date of delivery while making sure of a resource.

Generally, printing processes are associated with the following many processes.

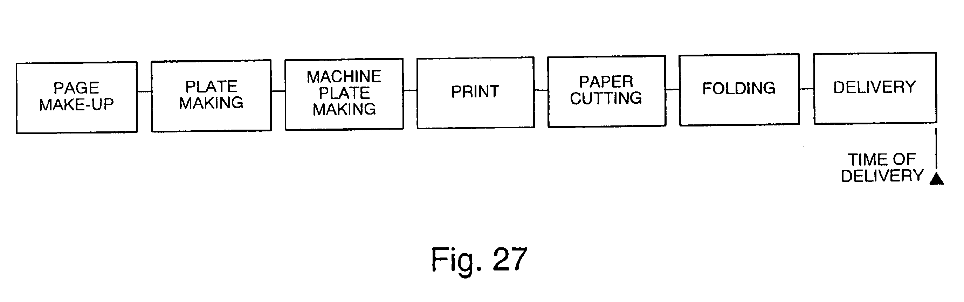

Fig. 27 is a view showing general printing processes.

As shown in Fig. 27, the printing processes are associated with many processes such as a page make-up, a plate making, a machine plate making, a printing, a paper cutting, a folding, a sewing, a processing, and a delivery. As a practical matter, however, there are various confirmation works such as a color proof and a page proof, which are to be carried out between a print company side and a client. Thus, even if there is made a schedule plan in which a schedule for printing for instance is earlier incorporated, it often happens that works for correction occur in accordance with a result of the confirmation works. And as a result, there is a case where it is obliged that the printing schedule plan is changed. In other words, it is difficult to cope with the correction involved in the confirmation works with only simply planning the above-mentioned series of processes with the fastest-schedule scheme, or only simply planning the above-mentioned series of processes with the latest schedule scheme.

### SUMMARY OF THE INVENTION

In view of the foregoing, it is an object of the present invention to provide a print schedule planning method for planning a schedule of printing processes, a print schedule planning system and a print schedule planning program storage medium, which are capable of coping with an alteration of processes.

To achieve the above-mentioned object, the present invention provides a print schedule planning method of planning a schedule for printing processes consisting of a series of processes including a machine plate making process for making a machine plate of a printing machine, said print schedule planning method comprising steps of:
obtaining information concerned with the series of processes; and
creating a schedule plan for first half processes in such a manner that a scheduling is performed in accordance with a fastest-schedule scheme for first half processes terminating up to the machine plate making process of the series of processes obtained in the obtaining step, and creating a schedule plan for latter half processes in such a manner that a scheduling is performed in accordance with a latest-schedule scheme for latter half processes starting after a starting point of the machine plate making process of the series of processes obtained in the obtaining step.

In the print schedule planning method according to the present invention as mentioned above, it is preferable that after creating the schedule plan of the first half processes and the schedule plan of the latter half processes, it is detected whether there is any overlapping of schedules between the schedule plan of the first half processes and the schedule plan of the latter half processes.

To achieve the above-mentioned object, the present invention provides a print schedule planning system for planning a schedule for printing processes consisting of a series of processes including a machine plate making process for making a machine plate of a printing machine, said print schedule planning system comprising:
obtaining means for obtaining information concerned with the series of processes; and
schedule plan creating means for creating a schedule plan for first half processes in such a manner that a scheduling is performed in accordance with a fastest-schedule scheme for first half processes terminating up to the machine plate making process of the series of processes obtained by said obtaining means, and for creating a schedule plan for latter half processes in such a manner that a scheduling is performed in accordance with a latest-schedule scheme for latter half processes starting after a starting point of the machine plate making process of the series of processes obtained by said obtaining means.

In the print schedule planning system according to the present invention as mentioned above, it is preferable that said schedule plan creating means has overlapping detection means for detecting as to whether there is any overlapping of schedules between the schedule plan of the first half processes and the schedule plan of the latter half processes.

To achieve the above-mentioned object, the present invention provides a print schedule planning program storage medium storing a print schedule planning program for forming on a computer system a print schedule planning system for planning a schedule for printing processes consisting of a series of processes including a machine plate making process for making a machine plate of a printing machine, said print schedule planning program comprising:
obtaining means for obtaining information concerned with the series of processes; and
schedule plan creating means for creating a schedule plan for first half processes in such a manner that a scheduling is performed in accordance with a fastest-schedule scheme for first half processes terminating up to the machine plate making process of the series of processes obtained by said obtaining means, and for creating a schedule plan for latter half processes in such a manner that a scheduling is performed in accordance with a latest-schedule scheme for latter half processes starting after a starting point of the machine plate making process of the series of processes obtained by said obtaining means.

### BRIEF DESCRIPTION OF THE DRAWINGS

Fig. 1 is a schematic construction view of a computer system in which an embodiment of a print schedule planning system according to the present invention is applied.
Fig. 2 is a hardware construction view of the computer system for the print schedule planning system shown in Fig. 1.
Fig. 3 is a hardware construction view of the print schedule planning system (the computer system) having the outside appearance shown in Fig. 2.
Fig. 4 is a schematic construction view of an embodiment of a print schedule planning system according to the present invention.
Fig. 5 is a view showing an entire menu screen in a print schedule planning according to the present embodiment.
Fig. 6 is a flowchart useful for understanding orders menu processing in the present embodiment.
Fig. 7 is a view showing an orders menu screen.
Fig. 8 is a view showing a new orders input screen.
Fig. 9 is a view showing an orders table in a database.
Fig. 10 is a flowchart useful for understanding a subroutine for setting up processing of continuous processes.
Fig. 11 is a view showing a continuous process-editing screen.
Fig. 12 is a view showing a continuous process-selecting screen displayed in the continuous process-editing screen.
Fig. 13 is a view showing an additional screen displayed in the continuous process-editing screen.
Fig. 14 is a view showing a process-working time set up screen displayed in the continuous process-editing screen.
Fig. 15 is a flowchart useful for understanding a scheduling in the present embodiment.
Fig. 16 is a flowchart useful for understanding a subroutine for the latest-scheduling in the present embodiment.
Fig. 17 is a view showing a state that the same order numbers are selected from a continuous process designation table to create a selection result table.
Fig. 18 is a view showing a selection result table in which the same order numbers are selected from a continuous process designation table.
Fig. 19 is a view showing an association table between the order numbers and the continuous process numbers.
Fig. 20 is a view showing a process resource table.
Fig. 21 is a view showing a schedule worktable.
Fig. 22 is a conceptual view of using conditions of a resource: CTP No. 1 machine.
Fig. 23 is a flowchart useful for understanding a subroutine for the fastest-scheduling in the present embodiment.
Fig. 24 is a view showing a schedule confirmation screen.
Fig. 25 is a view showing a working schedule table.
Fig. 26 is a view showing a schematic construction view of a print schedule planning program storage medium according to the present embodiment.
Fig. 27 is a view showing general printing processes.

### DETAILED DESCRIPTION OF PREFERRED EMBODIMENTS

Embodiments of the present invention will be described with reference to the accompanying drawings.

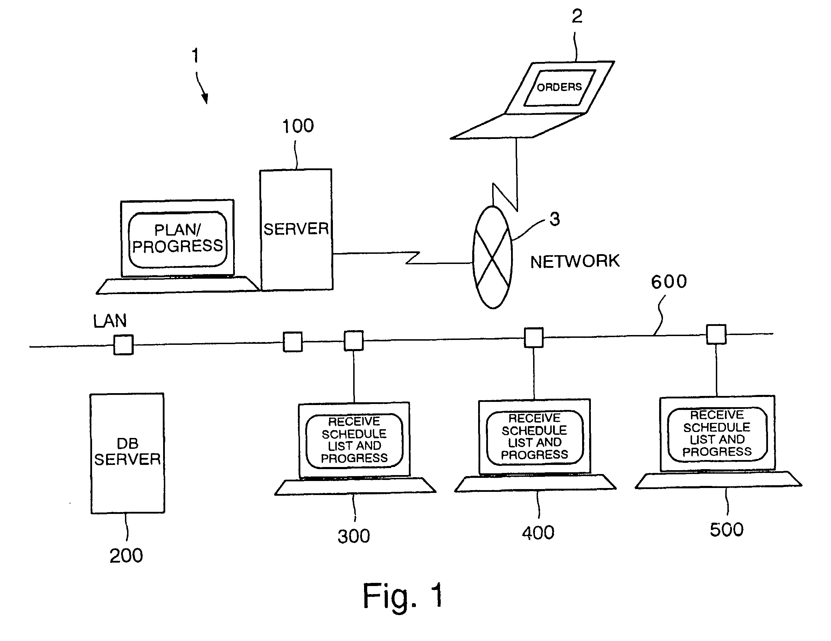

Fig. 1 is a schematic construction view of a computer system in which an embodiment of a print schedule planning system according to the present invention is applied.

As shown in Fig. 1, a computer system 1 comprises a server machine 100 of a print schedule planning system for planning a schedule of print processes and managing the progress, a server machine 200 having a database for storing information involved in print processes, the server machine 200 being connected through a LAN (Local Area Network) 600 to the server machine 100, and client machines 300, 400 and 500 each for receiving and displaying a schedule list for the print processes and the progress of the print processes.

Further, the computer system 1 is connected through a network 3 to a computer system 2 of a client who places an order with a printer having the computer system 1 for printing.

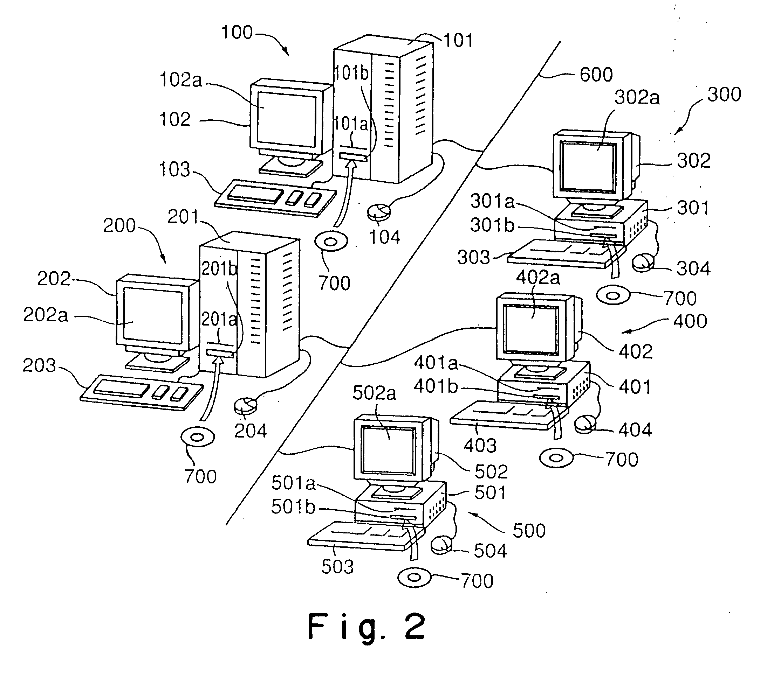

Fig. 2 is a hardware construction view of the computer system for the print schedule planning system shown in Fig. 1.

Fig. 2 exemplarily shows two server machines 100 and 200 and three client machines 300, 400 and 500. The server machines 100 and 200 and the client machines 300, 400 and 500 are connected to one another via the LAN 600. The two server machines 100 and 200 are each constituted of a high speed and large capacity of computer system, for example, a workstation. The three client machines 300, 400 and 500 are each constituted of a relatively small type of computer system, for example, a personal computer and a workstation.

The server machines 100 and 200 and the client machines 300, 400 and 500 respectively comprise: main frames 101, 201, 301, 401 and 501 each incorporating therein a CPU (Central Processing Unit), a RAM (Random Access Memory), a hard disk, and a communicating board; display units 102, 202, 302, 402 and 502 for displaying images and strings of characters on display screens 102a, 202a, 302a, 402a and 502a in accordance with instructions from the main frames 101, 201, 301, 401 and 501, respectively; keyboards 103, 203, 303, 403 and 503 for inputting user's instructions to the server machines 100 and 200 and the client machines 300, 400 and 500; and mice 104, 204, 304, 404 and 504 for inputting orders associated with icons or the like displayed on positions on the display screens 102a, 202a, 302a, 402a and 502a when the positions are designated, respectively.

Further, a hard disk of either one or both of the two server machines 100 and 200 is provided with a database storing information relating to a print schedule plan, so that the respective operators can access the database through the LAN 600 from the client machines 300, 400 and 500.

The main frames 101 and 201 of the server machines have, on the outside appearance, floppy disk drives 101a and 201a onto which floppy disks (not illustrated) are loaded, and CD-ROM drives 101b and 201b onto which CD-ROMs 700 are loaded, respectively. Inside the floppy disk drives 101a and 201a and the CD-ROM drives 101b and 201b, there are incorporated floppy disk drivers for driving the floppy disks loaded through the floppy disk drives 101a and 201a and CD-ROM drivers for driving the CD-ROMs 700 loaded through the CD-ROM drives 101b and 201b, respectively.

Similarly, the main frames 301, 401 and 501 of the client machines have, on the outside appearance, floppy disk drives 301a, 401a and 501a onto which floppy disks (not illustrated) are loaded, and CD-ROM drives 301b, 401b and 501b onto which CD-ROMs 700 are loaded, respectively. Inside the floppy disk drives 301a, 401a and 501a and the CD-ROM drives 301b, 401b and 501b, there are incorporated floppy disk drivers for driving the floppy disks loaded through the floppy disk drives 301a, 401a and 501a and CD-ROM drivers for driving the CD-ROMs 700 loaded through the CD-ROM drives 301b, 401b and 501b, respectively.

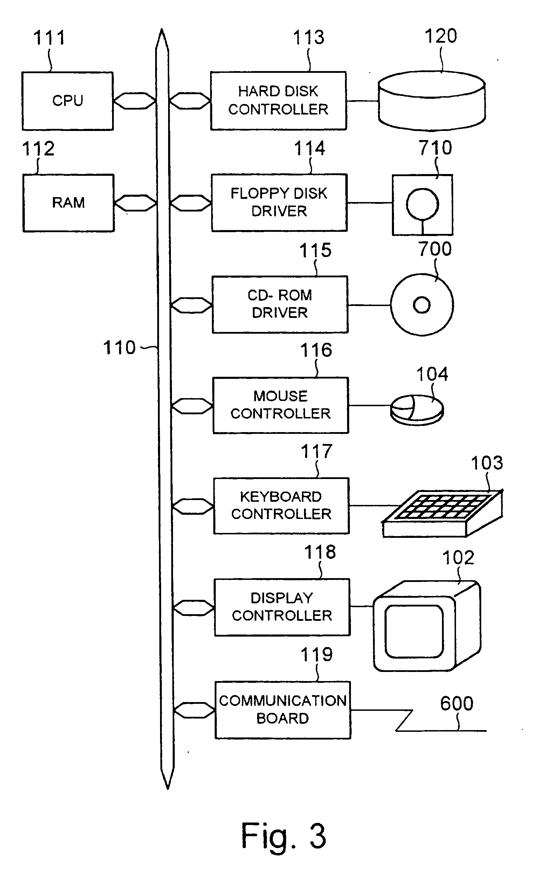

Fig. 3 is a hardware construction view of the print schedule planning system (the computer system) having the outside appearance shown in Fig. 2.

The hardware construction view of the print schedule planning system shows a CPU 111, a RAM 112, a hard disk controller 113, a floppy disk driver 114, a CD-ROM driver 115, a mouse controller 116, a keyboard controller 117, a display controller 118, and a communicating board 119. Those are connected to one another through a bus 110.

Inside the floppy disk driver 114 and the CD-ROM driver 115, as described referring to Fig. 2, the floppy disk 710 and the CD-ROM 700 are loaded, respectively. The floppy disk driver 114 and the CD-ROM driver 115 drive the floppy disk 710 and the CD-ROM 700 loaded, respectively.

The communicating board 119 is connected to the LAN 600 to control a communication with another machine.

Fig. 3 further shows a hard disk 120 to be accessed by the hard disk controller 113, a mouse 104 to be controlled by the mouse controller 116, a keyboard 103 to be controlled by the keyboard controller 117, and a CRT display 102 to be controlled by the display controller 118.

The print schedule planning system according to the present embodiment is formed on the above-mentioned computer system 1, and is worked.

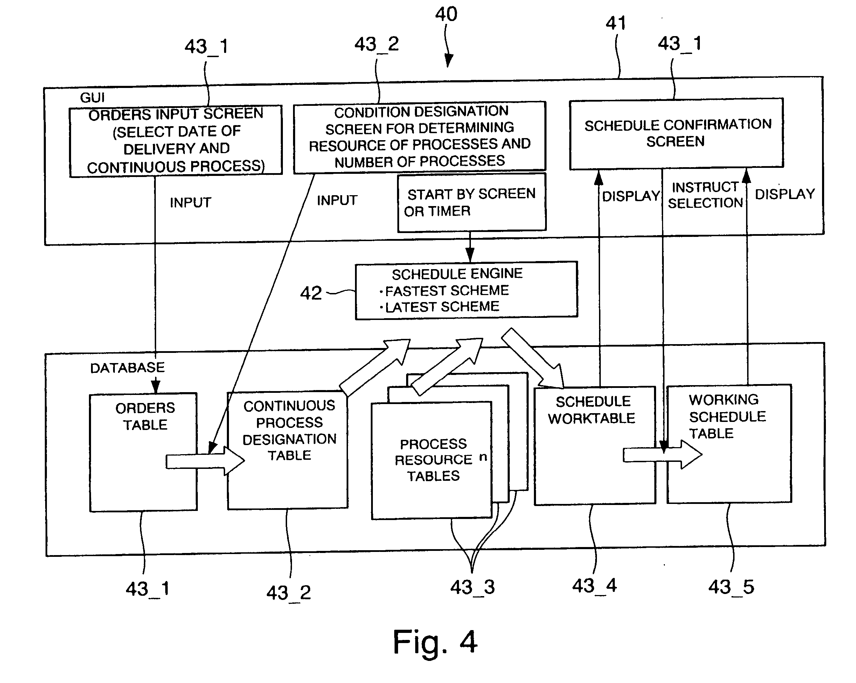

Fig. 4 is a schematic construction view of an embodiment of a print schedule planning system according to the present invention.

As shown in Fig. 4, a print schedule planning system 40 comprises a GUI (graphic user interface) 41, a schedule engine 42 and a database 43.

The GUI 41 has an orders input screen 41_1, a condition designation screen 41_2 for determining a resource of processes and the number of processes, and a schedule confirmation screen 41_3. The schedule engine 42 incorporates therein a scheduling algorithm for the fastest-schedule scheme and the latest-schedule scheme. The database 43 has an orders table 43_1, a continuous process designation table 43_2, a process resource table 43_3, a schedule worktable 43_4, and a working schedule table 43_5.

The GUI 41 in the present embodiment corresponds to the obtaining means referred to the present invention, and is for obtaining information involved in a series of printing processes including a machine plate making process in which a machine plate of a printing machine is created. Incidentally, it is acceptable that the obtaining means is any one of the server machines 100 and 200 and the client machines 300, 400 and 500 shown in Fig. 1, and also it is acceptable that the obtaining means is a terminal such as a portable personal computer located at a remote place.

The schedule engine 42 in the present embodiment corresponds to the schedule plan creating means referred to the present invention. The schedule engine 42 performs a scheduling for the first half processes, which are to be terminated before the machine plate making process, of a series of processes obtained by the obtaining means, is started, using the fastest-schedule scheme, so that a schedule plan of the first half processes is created. On the other hand, the schedule engine 42 performs a scheduling for the latter half processes, which are to be started after the starting time of the machine plate making process, of a series of processes obtained by the obtaining means, is started, using the latest-schedule scheme, so that a schedule plan of the latter half processes is created. The schedule engine 42 is formed on the server machine 100.

The reason why the schedule plan creating means in the present embodiment creates the schedule plan, as described above, in such a manner that a series of processes are divided into two parts of the first half processes and the latter half processes taking the starting time of the machine plate making process as the boundary, is as follows.

Generally, in the printing work by a printer using a machine plate, since there is often associated with alterations as to the edition caused by proof reading or the like up to a time point (referred to as the under edition in the present embodiment) that the machine plate process is started, it is efficient in the print schedule plan that in the first half the scheduling is performed in order and a timing of the under edition is late as much as possible as far as it can afford the schedule for the latter half processes. Further, since the processes after the timing for the under edition are clear in the number of processes, it is desired that the scheduling is performed in the reversed order for the purpose that the under edition is late.

Further, according to the earlier technology, the timing for the under edition itself is also determined by a person in accordance with one's experience and intuition, and thus a way of determination of the timing for the under edition greatly varies a schedule plan. In view of the foregoing, according to the present embodiment, a series of processes is clearly divided into two parts taking the timing for the under edition as a boundary, and the scheduling is performed in such a manner that the fastest-schedule scheme is adopted for up to the under edition and the latest-schedule scheme is adopted for after the under edition.

Incidentally, the print schedule planning system 40 is formed on the computer system 1 shown in Fig. 1. However, the GUI 41, the schedule engine 42 and the database 43 can be constructed in form of a scalable system, which is able to be formed on any machine, but not restricted to the embodiments shown in Figs. 1 and 2.

Next, there will be described an operation of the print schedule planning system 40 referring to screens, tables and flowcharts.

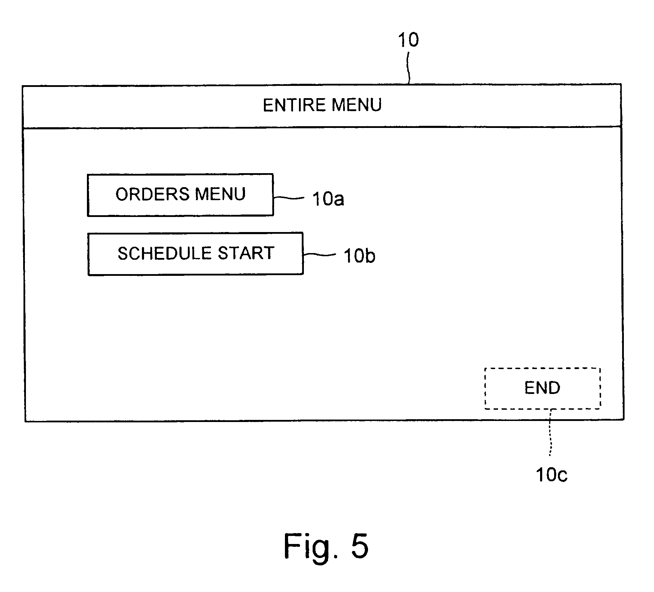

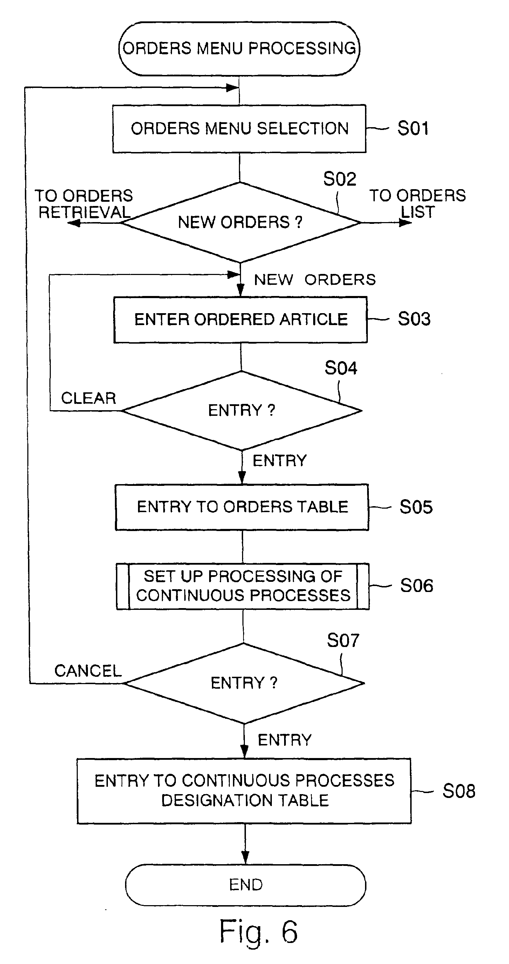

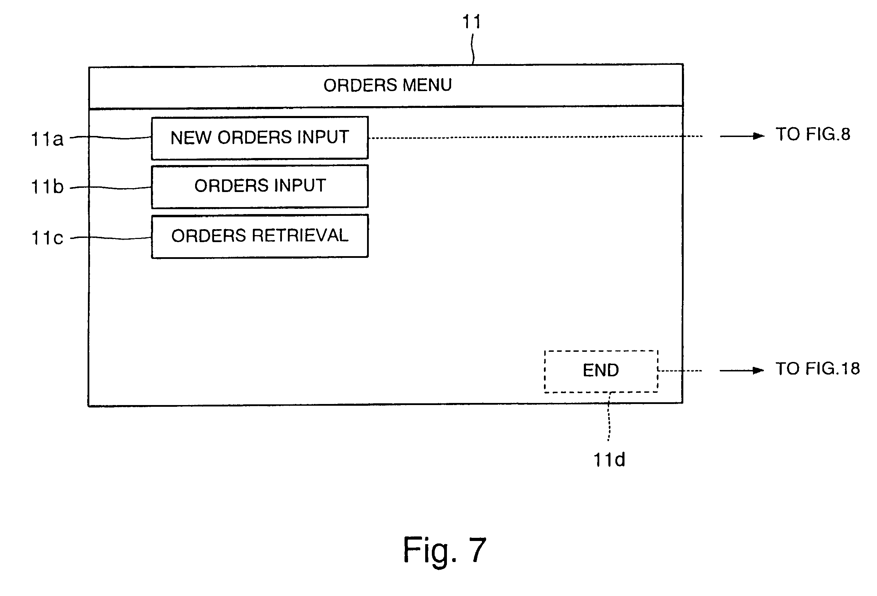

Fig. 5 is a view showing an entire menu screen in a print schedule planning according to the present embodiment. Fig. 6 is a flowchart useful for understanding orders menu processing in the present embodiment. Fig. 7 is a view showing an orders menu screen.

The orders menu processing shown in Fig. 6 corresponds to the processing of obtaining information as to a series of printing processes by the information obtaining means referred to in the present invention.

As shown in Fig. 5, on an entire menu screen 10, there are provided an orders menu button 10a, a schedule start button 10b, and an end button 10c.

On the entire menu screen 10, as shown in Fig. 5, when the orders menu button 10a is depressed, as shown in Fig. 6, an orders menu selection is performed (step S01). The orders menu selection is performed by an orders menu screen 11 shown in Fig. 7.

As shown in Fig. 7, on the orders menu screen 11, there are provided three menu selection buttons of a new orders input button 11a, an orders list button 11b and an orders retrieval button 11c, and an end button 11d.

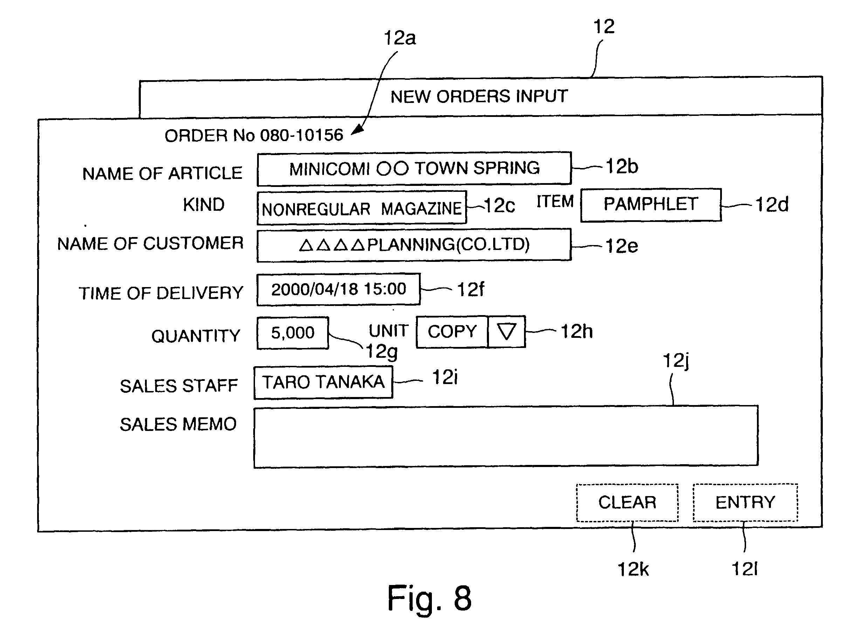

When the new orders input button 11a is depressed on the orders menu screen 11 of Fig. 7, the process goes to a step S03 in which a new orders input screen (cf. Fig. 8) is displayed. In the event that the orders list button 11b or the orders retrieval button 11c is depressed instead of the new orders input button 11a, the process branches to routines (not illustrated) of an orders list processing or an orders retrieval processing, respectively. Incidentally, when the entire processing is terminated, the end button 11d is depressed.

In the step S03, an input of objects of a newly received order is performed.

Fig. 8 is a view showing a new orders input screen.

As shown in Fig. 8, in a new orders input screen 12, an order number 12a, which is automatically applied in the system, is displayed, for example, like "080-10156". Next, in the step S03, an operator inputs items such as an article name 12b, a kind 12c, an item 12d, a customer name 12e, a delivery date 12f, a quantity 12g, a unit 12h, a sales staff 12i, and a sales memo 12j. When an entry button 121 is depressed (a step S04), the process goes to a step S05. Incidentally, on the new orders input screen 12, there is provided a clear button 12k which is used when input data of the items is corrected.

In the step S05, an entry to the orders table 43_1 (cf. Fig. 4) is performed.

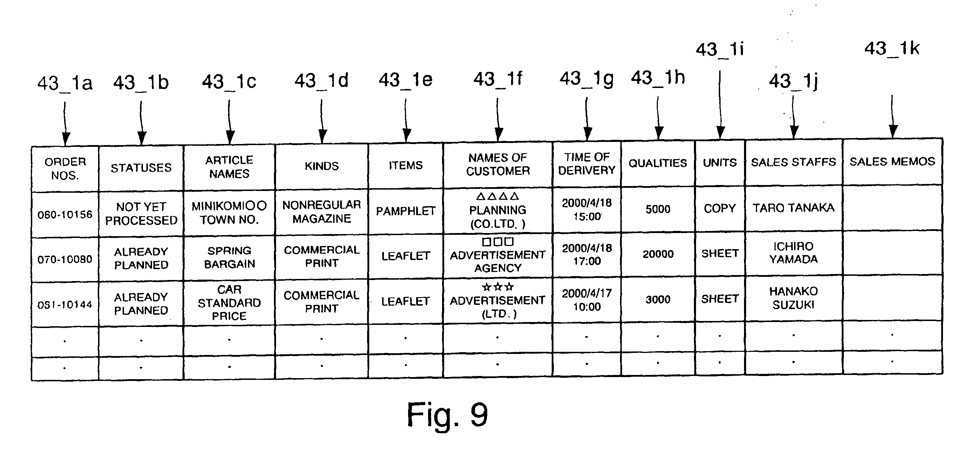

Fig. 9 is a view showing an orders table in a database.

The orders table 43_1 is a part of the database 43 shown in Fig. 4, and as shown in Fig. 9, is associated with items such as order numbers 43_1a, statuses 43_1b, article names 43_1c, kinds 43_1d, items 43_1e, customer names 43_1f, delivery dates 43_1g, quantities 43_1h, units 43_1i, sales staffs 43_1j, and sales memos 43_1k. The datum inputted in the step S03 are entered into the respective items of the orders table 43_1.

Next, a subroutine for setting up processing of continuous processes is executed (a step S06).

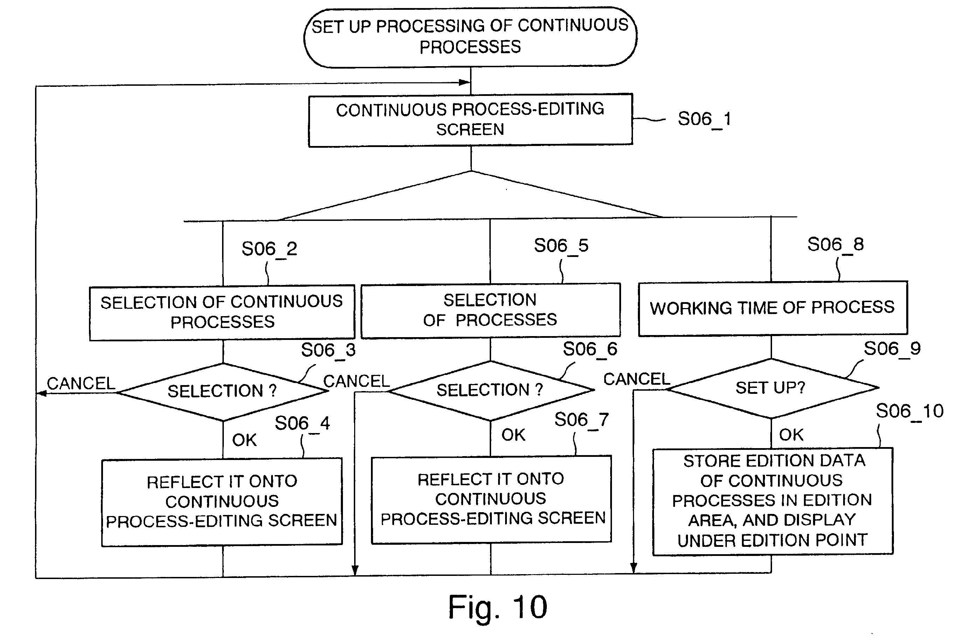

Fig. 10 is a flowchart useful for understanding a subroutine for setting up processing of continuous processes.

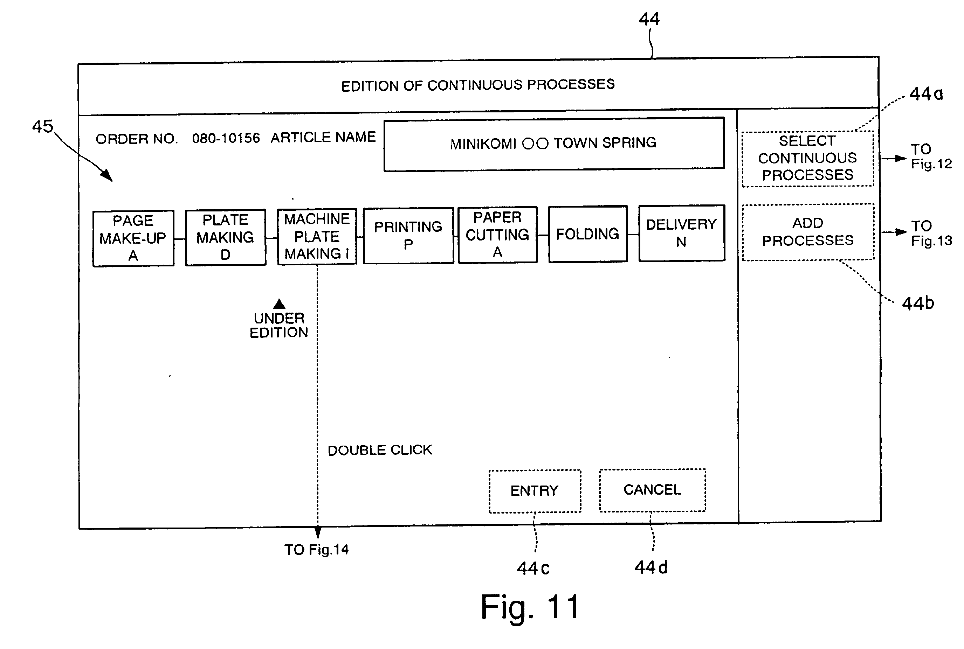

As shown in Fig. 10, first, in step S06_1, an edition is performed in accordance with a continuous process-editing screen (cf. Fig. 11).

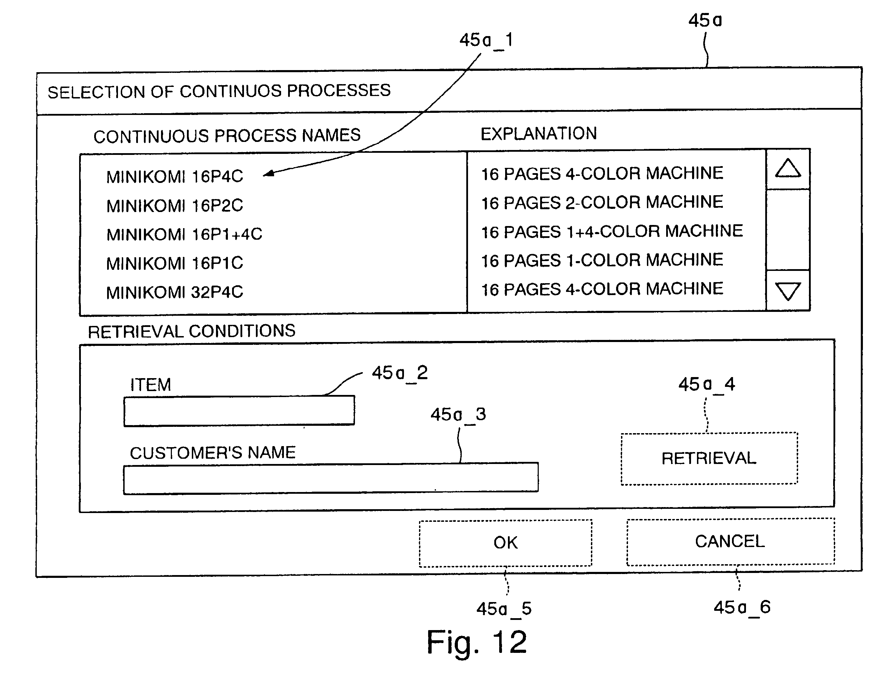

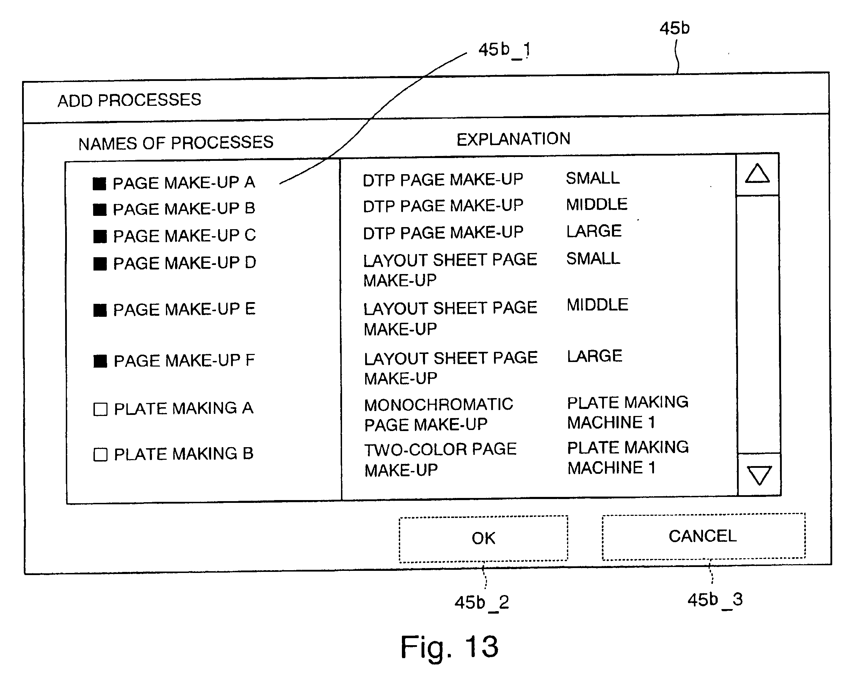

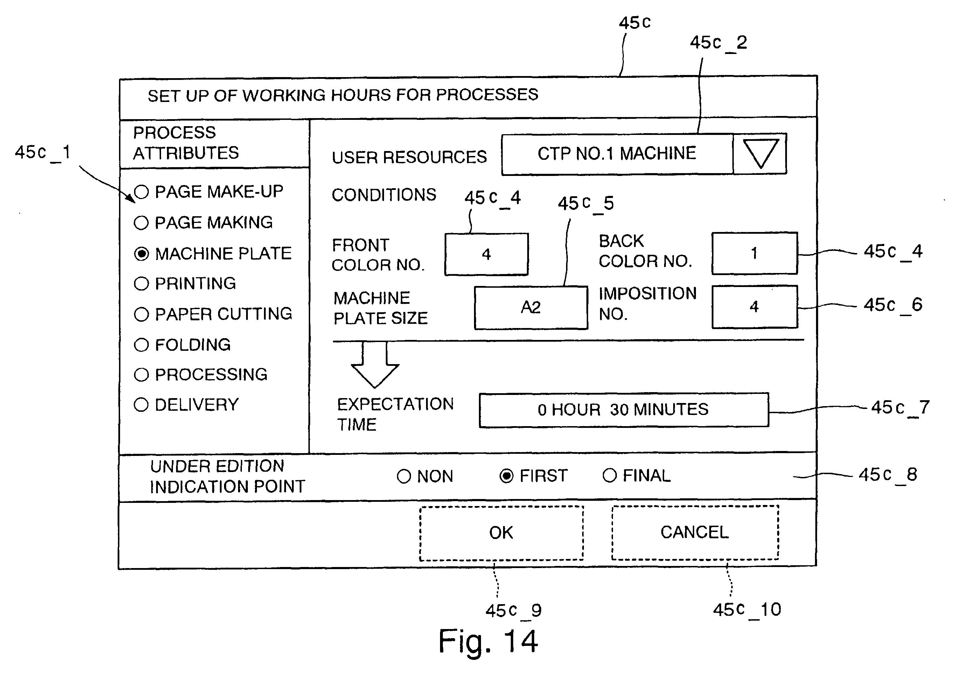

Fig. 11 is a view showing a continuous process-editing screen. Fig. 12 is a view showing a continuous process-selecting screen displayed in the continuous process-editing screen. Fig. 13 is a view showing an additional screen displayed in the continuous process-editing screen. Fig. 14 is a view showing a process-working time set up screen displayed in the continuous process-editing screen.

As shown in Fig. 11, on a continuous process-editing screen 44, there are provided a continuous process-selection button 44a, a process addition button 44b, an entry button 44c, a cancel button 44d and a continuous process-editing window 45.

The orders input screen 41_1 of the GUI 41 shown in Fig. 4 denotes both the new orders input screen 12 shown in Fig. 8 and the continuous process-editing screen 44 shown in Fig. 11.

In step S06_1, when an operator depresses the continuous process-selection button 44a on the continuous process-editing screen 44, a continuous process-selection screen 45a (cf. Fig. 12) is displayed on the continuous process-editing screen 44, and the process goes to a selection processing for the continuous processes (a step S06_2). Of a plurality of continuous process names 45a_1 displayed on the continuous process-selection screen 45a shown in Fig. 12, for example, "minicomi 16P4C", is selected, and then an item and a customer's name are entered into an item column 45a_2 and a customer's name column 45a_3 of retrieval conditions, respectively. And finally when an OK button 45a_5 is depressed (step S06_3), on the continuous process-editing window 45 of the continuous process-editing screen 44, as shown in Fig. 11, there are displayed seven continuous processes a "page make-up A", a "plate making D", a "machine plate making I", a "printing P", a "paper cutting A", a "folding", and a "delivery N", which constitute the continuous process name "minicomi 16P4C" (step S06_4). In case of cancellation, when the cancel button 45a_6 is depressed, the process goes to the step S06_1. In the side of the customer's name column 45a_3, there is provided a customer's name retrieval button 45a_4. When the customer's name retrieval button 45a_4 is depressed, a plurality of customer's names, which are registered beforehand, is displayed on the customer's name column 45a_3. Selection of a desired customer's name among the plurality of customer's names makes it possible to enter the customer's name, so that the past continuous processes associated with the customer's name can be called. This is the same as to the item 45a_2 too.

While it is acceptable that as mentioned above, the continuous process-selection screen 45a is used to call the continuous processes, which are registered beforehand, it is also acceptable that a process addition button 44b of the continuous process-editing screen 44 is depressed (a step S06_5) to display an additional screen for processes (cf. Fig. 13) in the continuous process-editing screen 44, so that process names are selected in a desired order to perform an edition for the continuous processes.

In the event that there is a process which is to be further added to the continuous processes displayed on the continuous process-editing window 45 in Fig. 11, when the process addition button 44b on the continuous process-editing screen 44 is depressed, an addition screen for processes (cf. Fig. 13) is displayed in the continuous process-editing screen 44, so that the process goes to an addition processing for processes (the step S06_5). It is effective that of a plurality of process names 45b_1 displayed on an addition screen 45b for processes shown in Fig. 13, a desired process name is selected and an OK button 45b_2 is depressed (a step S06_6). When the OK button 45b_2 is depressed, a result of the addition processing for processes is reflected on the continuous process-editing screen 44 (a step S06_7). In case of a cancellation, when a cancel button 45b_3 is depressed, the process returns to the step S06_1.

After the desired continuous processes are displayed on the continuous process-editing window 45, an operator performs a set up of working hours for the processes (a step S06_8). When the operator double-clicks a desired process, of the processes displayed on the continuous process-editing window 45, a process working hours set up screen 45c shown in Fig. 14 is displayed. Through the process working hours set up screen 45c, there are entered process attributes 45c_1 of the respective processes, used resources 45c_2, and conditions (a front color number 45c_3, a back color number 45c_4, a machine plate size 45c_5, an imposition number 45c_6, and an expectation time 45c_7) for determining the number of processes for the respective processes. Thus the number of processes for the respective processes is determined.

Here, a designation of the under edition point is performed. According to the present embodiment, of a series of processes, a machine plate making process start point is designated as the under edition point. For example, of a plurality of processes displayed on the continuous process-editing window 45, the "machine plate I" is double-clicked, and at the time point when the process working time set up screen shown in Fig. 14 is displayed, the "first" is designated as an under edition indication point 45c_8 of a process working time set up screen 45c, and then an OK button 45c_9 is depressed (a step S06_9). When the OK button 45c_9 is depressed, the edition data of the continuous processes are stored in the edition area, and as shown in Fig. 11, a mark "▲" , which is indicative of an under edition point, is displayed at the lower left of the "machine plate I" displayed on the continuous process-editing window 45 (a step S06_10).

Incidentally, it is acceptable that the under point is newly designated in the manner as mentioned above, or alternatively it is acceptable that the under point is designated using information which is stored beforehand in a system in form of an attribute of the process.

After the process set up for the respective processes is terminated, when an entry button 44c of the continuous process-editing screen 44 is depressed (Fig. 6: step S07), the process goes to a step S08 in which edition data of the continuous processes is stored in a continuous processes designation table 43_2 of the database 43, and all the processing for the order input are terminated, so that the order menu screen 11 shown in Fig. 7 is displayed. Incidentally, in the event that in the step S07 the cancel button 4b is depressed, the process returns to the step S01 to repeat the orders menu selection.

On the orders menu screen 11, when an end button 11d is depressed, the control shifts to the entire menu screen 10 (cf. Fig. 5). When the schedule start button 10b of the entire menu screen 10 is depressed, the schedule processing starts by the schedule plan creating means referred to in the present invention.

In the scheduling of the present embodiment, of a series of processes entered by the input means, the latter half processes, which are started after the machine plate making process start point (up to the under edition point), is subjected to a scheduling in accordance with the latest-schedule scheme to make a schedule plan for the latter half processes. On the other hand, of a series of processes entered by the input means, the first half processes, which are terminated before the machine plate making process is started (up to the under edition point), is subjected to a scheduling in accordance with the fastest-schedule scheme to make a schedule plan for the first half processes.

The fastest-schedule scheme is of forming a schedule in order of higher priority of process in practice while making sure of a resource. The latest-schedule scheme is of forming a schedule in turn from the later process to the former process counting backward from the date of delivery while making sure of a resource.

The scheduling is initiated, as shown in Fig. 4, when the schedule engine 42 starts by the schedule start button 10b shown in Fig. 10 or a timer. The scheduling is performed in accordance with the continuous process designation table 43_2 and the process resource table 43_3, so that the schedule worktable 43_4 is created.

Next, there will be explained the algorithm of the scheduling in the present embodiment.

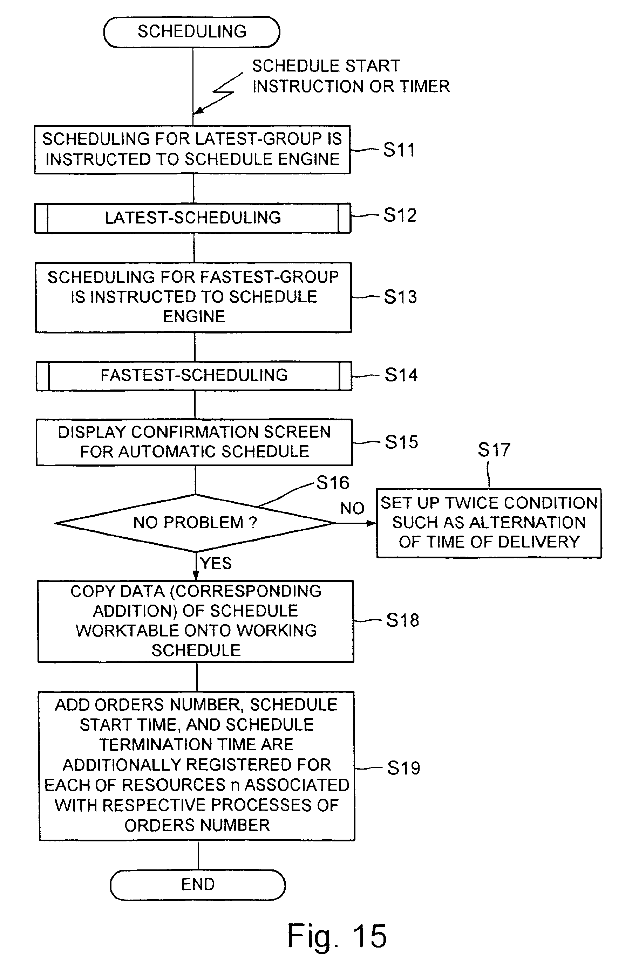

Fig. 15 is a flowchart useful for understanding a scheduling in the present embodiment.

When the scheduling is initiated in response to a depression of the schedule start button 10b shown in Fig. 5 or in accordance with an instruction from a timer, as shown in Fig. 15, the scheduling for the latest-group, or the first half processes which are terminated before the machine plate making processes are started (up to the under edition point), is instructed to the schedule engine (a step S11). Thus, the latest-scheduling is initiated (a step S12).

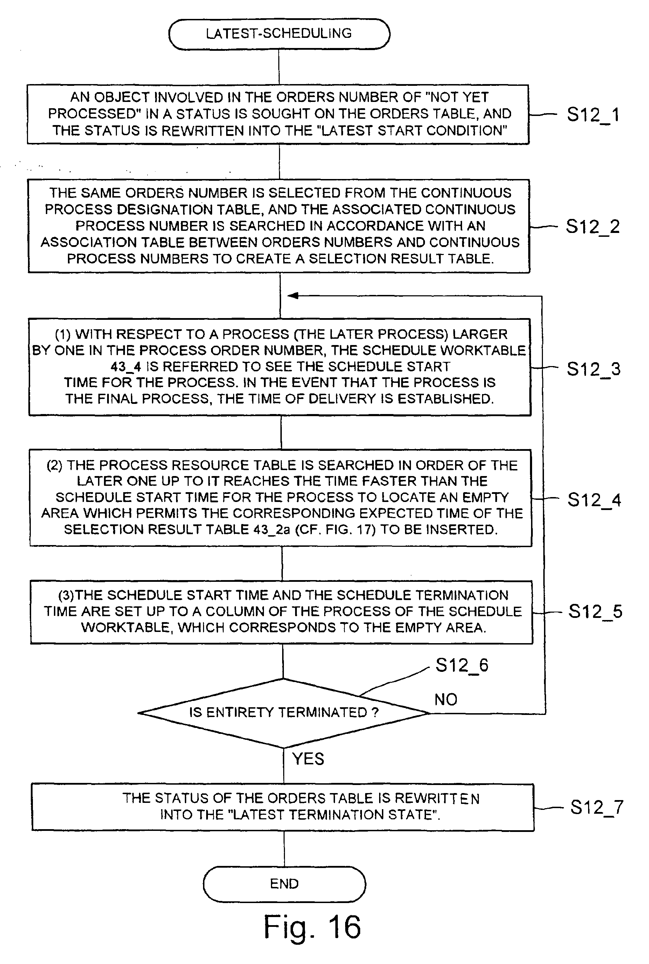

Fig. 16 is a flowchart useful for understanding a subroutine for the latest-scheduling in the present embodiment.

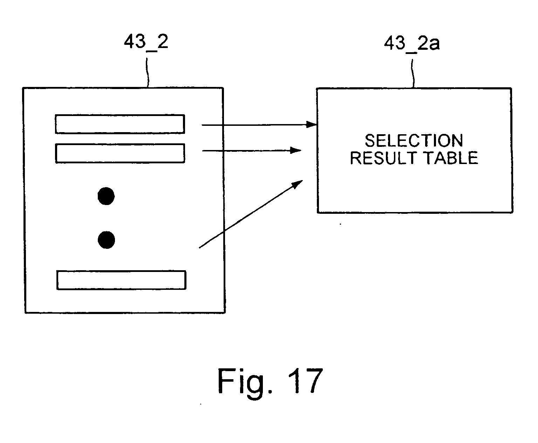

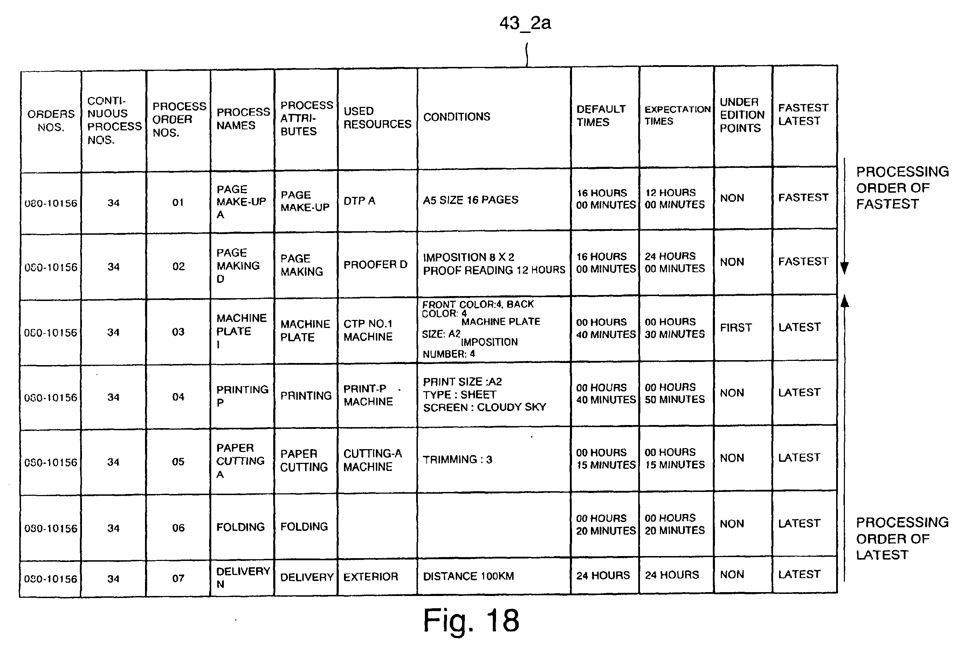

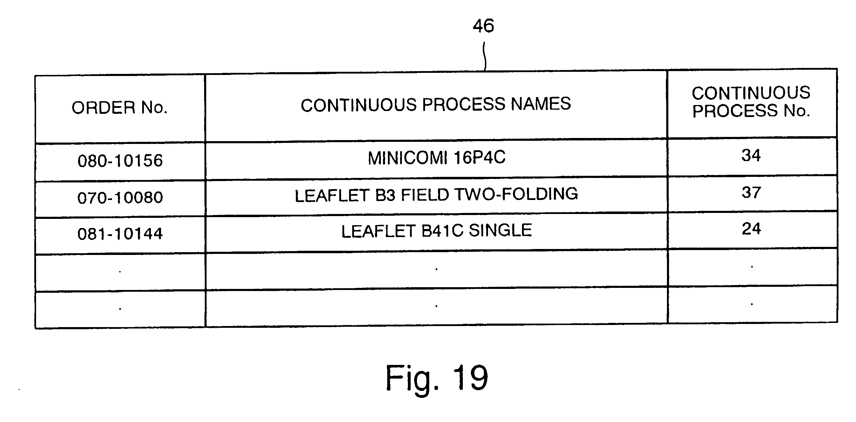

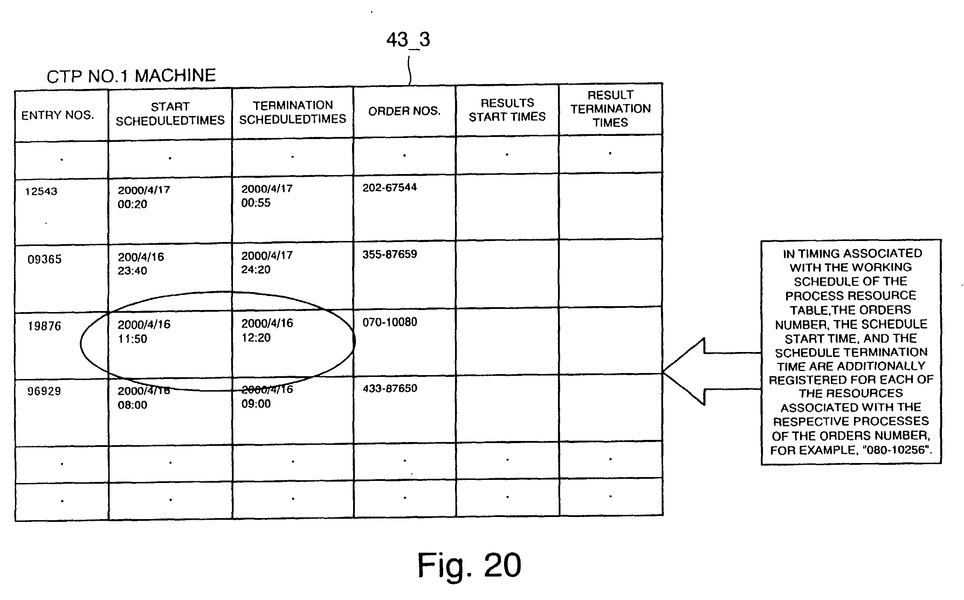

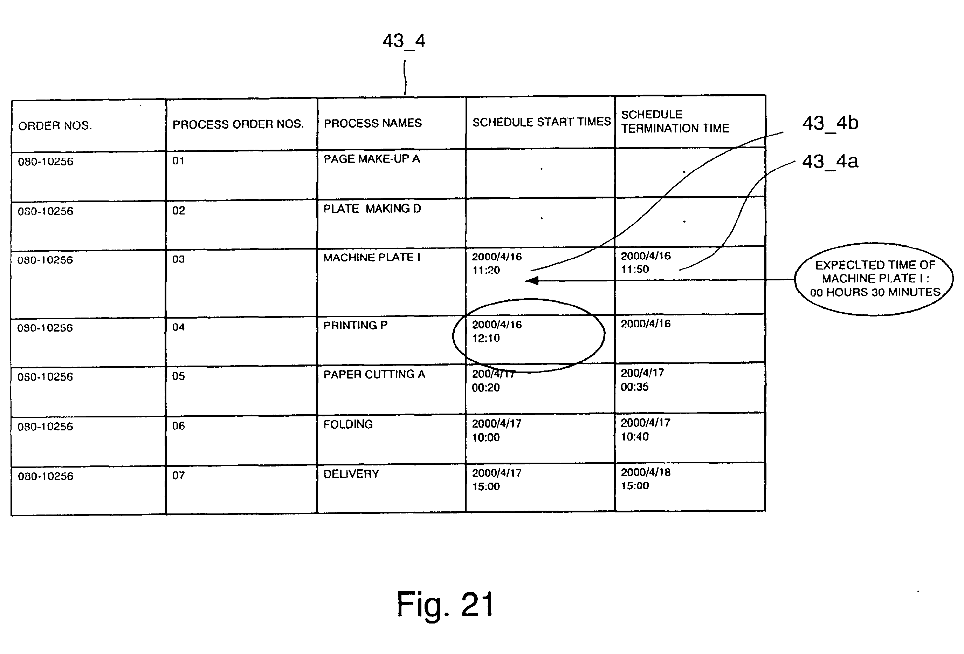

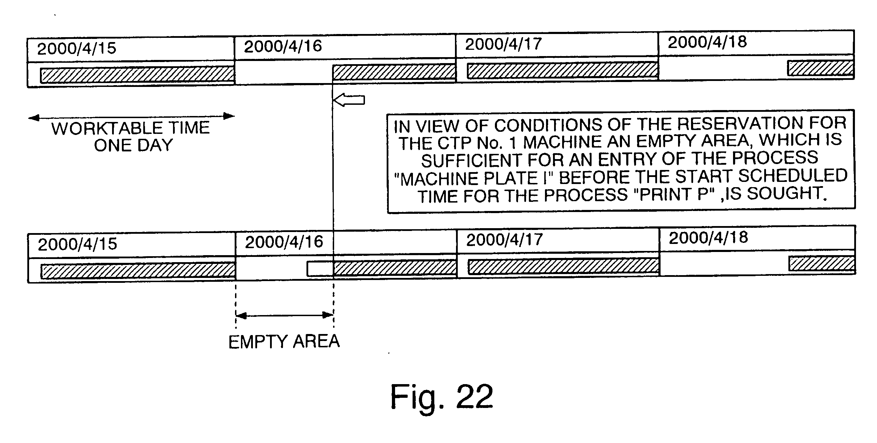

Fig. 17 is a view showing a state that the same order numbers are selected from a continuous process designation table to create a selection result table. Fig. 18 is a view showing a selection result table in which the same order numbers are selected from a continuous process designation table. Fig. 19 is a view showing an association table between the order numbers and the continuous process numbers. Fig. 20 is a view showing a process resource table. Fig. 21 is a view showing a schedule worktable. Fig. 22 is a conceptual view of using conditions of a resource: CTP No. 1 machine.

As shown in Fig. 16, first, an object involved in the orders number of "not yet processed" in a status is sought on the orders table 43_1, and the status is rewritten into the "latest start condition" (a step S12_1).

Next, as shown in Fig. 17, the same orders number is selected from the continuous process designation table 43_2 (cf. Fig. 4), and the associated continuous process number is searched in accordance with an association table 46 shown in Fig. 19 between orders numbers and continuous process numbers to create a selection result table 43_2a as shown in Fig. 18 (a step S12_2).

Next, with respect to the entire "latest" processes after the process name "machine plate I" designated as the under edition point in the selection result table 43_2a as shown in Fig. 18, the following (1) to (3) processing is repeated in turn from the larger number in a process order number.
(1) With respect to a process (the later process) larger by one in the process order number, the schedule worktable 43_4 (cf. Fig. 4 and Fig. 21) is referred to see the schedule start time for the process. In the event that the process is the final process, the time of delivery is established (step S12_3).
(2) The process resource table 43_3 (cf. Fig. 4 and Fig. 20) is searched in order of the later one up to it reaches the time faster than the schedule start time for the process to locate an empty area which permits the corresponding expected time of the selection result table 43_2a (cf. Fig. 17) to be inserted (step S12_4).
(3) The schedule start time and the schedule termination time are set up to a column of the process of the schedule worktable 43_4, which corresponds to the empty area (step S12_5).

For example, in the schedule worktable 43_4 shown in Fig. 21, there will be explained an example in which a schedule (the schedule start time and the schedule termination time) for the process "machine plate I" of the process order number 03 just one before the process "print P" of the process order number 04 is determined.

The schedule start time "2000/04/16 12:10" for the process "print P" of the process order number 04 of the schedule worktable 43_4 shown in Fig. 21 is read, the termination scheduled time "2000/04/16 11:50", which is before the schedule start time "2000/04/16 12:10", is sought from among the termination scheduled time of the "CTP No. 1 machine" of the process resource table 43_3 (Fig. 20), and the associated start scheduled time "2000/04/16 11:20" is read.

Fig. 22 shows using conditions of the CTP No. 1 machine of data existing in the schedule worktable 43_4. In view of conditions of the reservation for the CTP No. 1 machine shown in Fig. 22, an empty area, which is sufficient for an entry of the process "machine plate I" before the start scheduled time "2000/04/16 12:10" for the process "print P", is sought. As shown in Fig. 14, since "0 hour 30 minutes" is entered, as the expected time 45c_7 of the process "machine plate I", on the process working hours set up screen 45c, "2000/04/16 11:50" is written into the column 43_4a for the schedule termination time for the process "machine plate I" of the process order number 03 of the schedule worktable 43_4 shown in Fig. 21, and "2000/04/16 11:20" is written into the column 43_4b for the schedule start time for the process "machine plate I".

In the event that the entirety processing for the "latest" process is terminated (the step S12_6), the process goes to the next step S12_7 in which the status of the orders table is rewritten into the "latest termination state".

Thus, when the "latest" scheduling is terminated, the process returns to the step S13 in Fig. 15. Then, the scheduling for the fastest-group, or the latter half processes which are started after the machine plate making processes are started (up to the under edition point), is instructed to the schedule engine 42 (a step S13). Thus, the fastest-scheduling is initiated (a step S14).

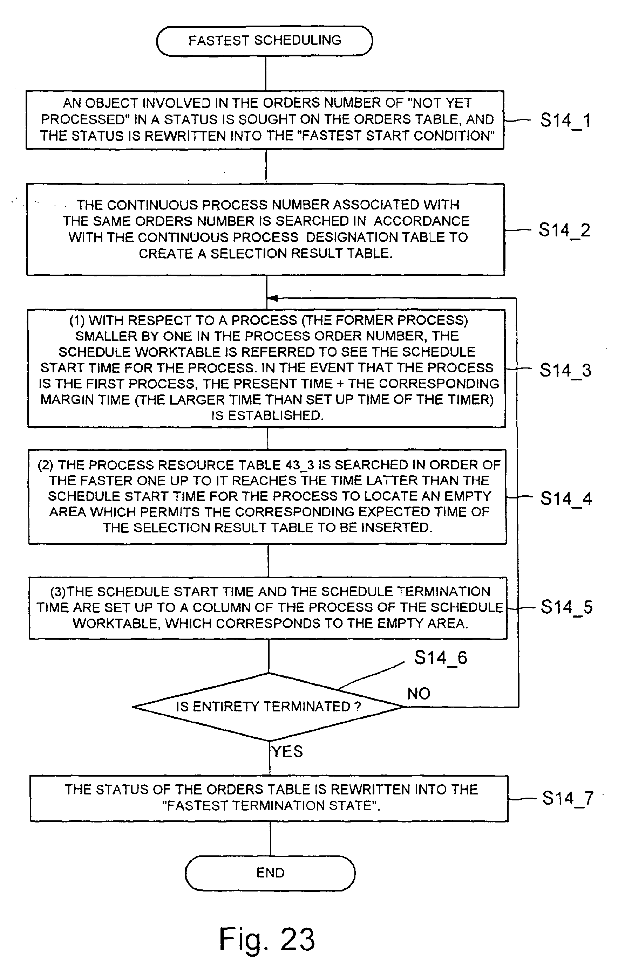

Fig. 23 is a flowchart useful for understanding a subroutine for the fastest-scheduling in the present embodiment.

As shown in Fig. 23, first, an object involved in the orders number of "not yet processed" in a status is sought on the orders table, and the status is rewritten into the "fastest start condition" (a step S14_1).

Next, the continuous process number associated with the same orders number is searched in accordance with the continuous process designation table 43_2 (cf. Fig. 4 and Fig. 17) to create a selection result table 43_2a as shown in Fig. 18 (a step S14_2).

Next, all the "fastest" processes are selected from among the selection result table 43_2a as shown in Fig. 18, and with respect to the entire "fastest" processes, the following (1) to (3) processing is repeated in turn from the smaller number in a process order number.
(1) With respect to a process (the former process) smaller by one in the process order number, the schedule worktable 43_4 (cf. Fig. 4 and Fig. 21) is referred to see the schedule start time for the process. In the event that the process is the first process, the present time + the corresponding margin time (the larger time than set up time of the timer) is established (step S14_3).
(2) The process resource table 43_3 (cf. Fig. 4 and Fig. 20) is searched in order of the faster one up to it reaches the time latter than the schedule start time for the process to locate an empty area which permits the corresponding expected time of the selection result table 43_2a (cf. Fig. 17) to be inserted (step S14_4).
(3) The schedule start time and the schedule termination time are set up to a column of the process of the schedule worktable 43_4, which corresponds to the empty area (step S14_5).

In the event that the entirety processing for the "fastest" process is terminated (the step S14_6), the process goes to the next step S14_7 in which the status of the orders table is rewritten into the "fastest termination state".

Thus, when the "fastest" scheduling is terminated, the process returns to the step S15 in Fig. 15.

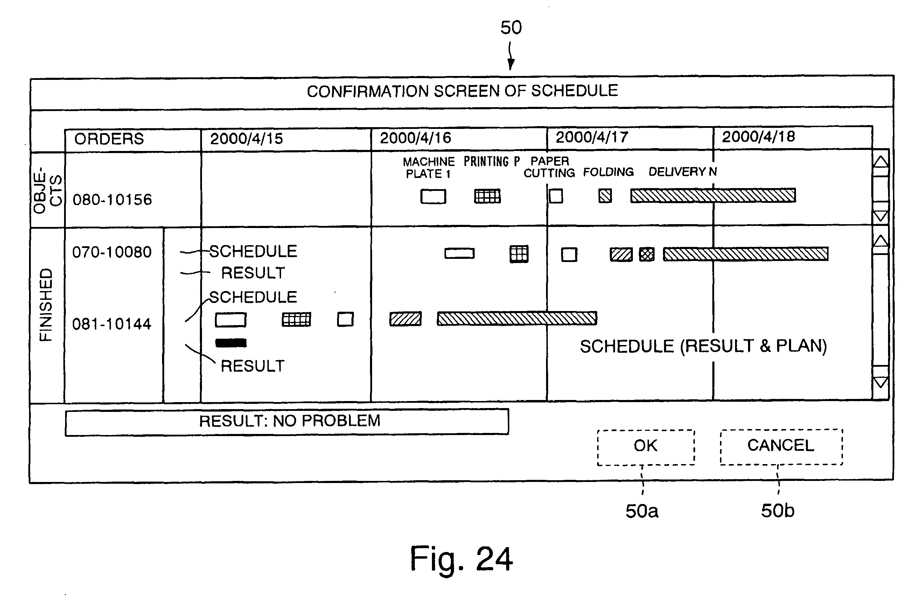

In the step S15, a schedule confirmation screen 50 (cf. Fig. 24) is displayed.

Fig. 24 is a view showing a schedule confirmation screen.

As shown in Fig. 24, on the upper portion of the schedule confirmation screen 50, datum for processes on the orders number "080-10150" of the schedule object, which exist in the schedule worktable 43_4, are graphically displayed on the time axis. On the lower portion of the schedule confirmation screen 50, plan schedule and actual results schedule for processes on the orders number, which has been already scheduled, are graphically displayed on the time axis.

An operator confirms through the schedule confirmation screen 50 such a matter that overlapping of schedules and delay of the date of delivery are not associated and decides whether no problem is concerned (a step S16). In the event that it is decided that no problem is concerned, when an OK button 50a of the schedule confirmation screen 50 is depressed, data (the corresponding addition) of the schedule worktable 43_4 is copied on the working schedule table 43_5 (a step S18).

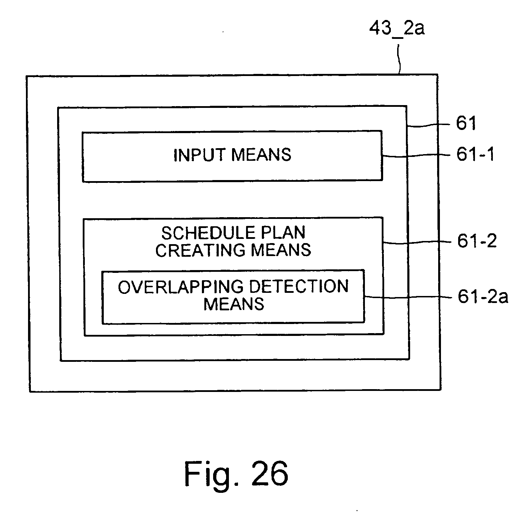

Incidentally, an incorporation of overlapping detection means 61_2a (cf. Fig. 26) for detecting as to whether there is any overlapping of schedules between a schedule plan of the first half processes and a schedule plan of the latter half processes, which are created by the schedule plan creating means, into the schedule plan creating means of the present embodiment, makes it possible to automatically detect as to whether there is any overlapping of schedules instead of the confirmation work by the operator through the schedule confirmation screen 50.

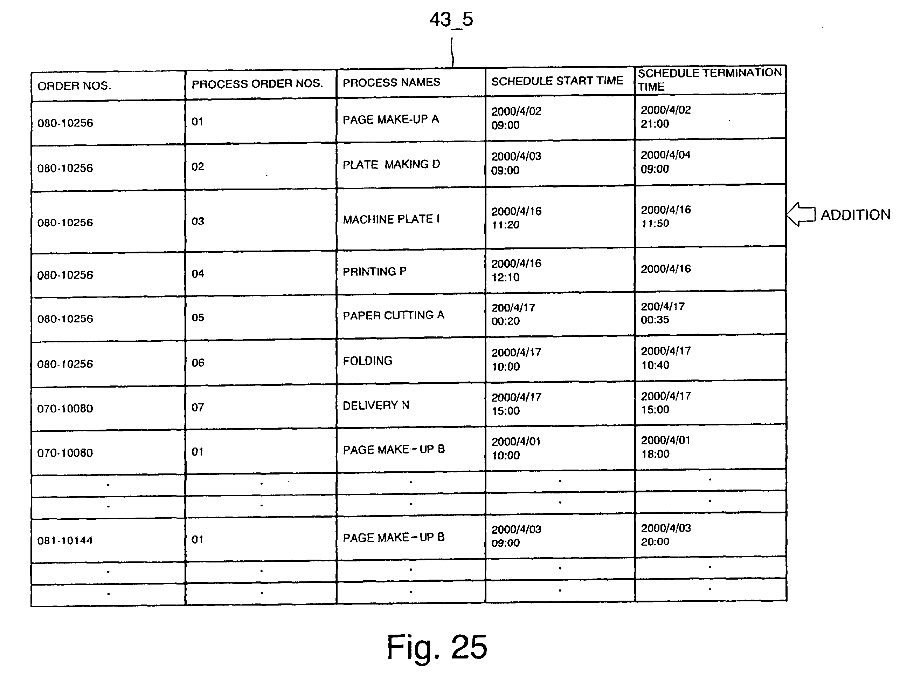

Fig. 25 is a view showing a working schedule table.

As shown in Fig. 25, for example, the corresponding additional data of the schedule worktable 43_4, for the "machine plate I", an orders number "080-10256, a process order number "03", a schedule start time "2000/04/16 11:20", and a schedule termination time "2000/04/16 11:50", are added to the working schedule table 43_5.

Next, in timing associated with the working schedule of the process resource table 43_3, the orders number, the schedule start time, and the schedule termination time are additionally registered for each of the resources associated with the respective processes of the orders number, for example, "080-10256" (a step S19), and the entire scheduling processing is terminated. Thus, the control shifts to the entire menu screen 10. When the end button 10c of the entire menu screen 10 is depressed, all the processing is over.

In this manner, the schedule results are reflected onto the working schedule table 43_5, so that the persons concerned can read.

In the step S16, in the event that it is decided that the problem is concerned, when the cancel button 50b of the schedule confirmation screen 50 (cf. Fig. 24) is depressed, the re-setting processing of determining resources and the number of processes for the processes, such as a delivery date alternation and a working time alteration, is performed through the condition designation screen 41_2 (a step S17) of the GUI 41 (cf. Fig. 4).

Next, there will be explained a print schedule planning program storage medium according to the present embodiment.

Fig. 26 is a view showing a schematic construction view of a print schedule planning program storage medium according to the present embodiment.

As shown in Fig. 26, a print schedule planning program storage medium 60 according to the present embodiment stores therein a print schedule planning program 61 having input means 61_1 and print schedule plan creating means 61_2 of the above-mentioned print schedule planning system. Incidentally, according to the present embodiment, the print schedule plan creating means 61_2 includes overlapping detection means 61_2a.

A kind of storage medium of the print schedule planning program storage medium 60 is not restricted to a specified one. Any one is acceptable, as the storage medium, which can store the print schedule planning program 61. For example, CD-ROM, CD-R/RW, MO (Magnet-Optical Disk) and a floppy disk can be used as the storage medium.

For example, when the CD-ROM 700 storing the print schedule planning program 61 is loaded onto a desired one of the server machines 100 and 200, and the client machines 300, 400 and 500 shown in Fig. 2 to install the print schedule planning program 61 in a memory unit of the associated machine, a print schedule planning system of the present invention can be easily constructed.

As described above, according to a print schedule planning method and a print schedule planning system, a timing of an under edition is designated, and a series of processes is clearly divided into two parts taking the timing for the under edition as a boundary, and the scheduling is performed in such a manner that the fastest-schedule scheme is adopted for up to the under edition and the latest-schedule scheme is adopted for after the under edition. This feature makes it possible to implement a print schedule planning method, a print schedule planning system, which are capable of coping with an alteration of printing processes due to the proof reading.

Further, according to a print schedule planning program storage medium of the present invention, it is possible to readily construct the above-mentioned print schedule planning system on the computer system.

Although the present invention has been described with reference to the particular illustrative embodiments, it is not to be restricted by those embodiments but only by the appended claims.

## Claims

1. A print schedule planning method of planning a schedule for printing processes consisting of a series of processes including a machine plate making process for making a machine plate of a printing machine, said print schedule planning method comprising steps of:
obtaining information concerned with the series of processes; and
creating a schedule plan for first half processes in such a manner that a scheduling is performed in accordance with a fastest-schedule scheme for first half processes terminating up to the machine plate making process of the series of processes obtained in the obtaining step, and creating a schedule plan for latter half processes in such a manner that a scheduling is performed in accordance with a latest-schedule scheme for latter half processes starting after a starting point of the machine plate making process of the series of processes obtained in the obtaining step.

2. A print schedule planning method according to claim 1, wherein after creating the schedule plan of the first half processes and the schedule plan of the latter half processes, it is detected whether there is any overlapping of schedules between the schedule plan of the first half processes and the schedule plan of the latter half processes.

3. A print schedule planning system for planning a schedule for printing processes consisting of a series of processes including a machine plate making process for making a machine plate of a printing machine, said print schedule planning system comprising:
obtaining means for obtaining information concerned with the series of processes; and
schedule plan creating means for creating a schedule plan for first half processes in such a manner that a scheduling is performed in accordance with a fastest-schedule scheme for first half processes terminating up to the machine plate making process of the series of processes obtained by said obtaining means, and for creating a schedule plan for latter half processes in such a manner that a scheduling is performed in accordance with a latest-schedule scheme for latter half processes starting after a starting point of the machine plate making process of the series of processes obtained by said obtaining means.

4. A print schedule planning system according to claim 3, wherein said schedule plan creating means has overlapping detection means for detecting as to whether there is any overlapping of schedules between the schedule plan of the first half processes and the schedule plan of the latter half processes.

5. A print schedule planning program storage medium storing a print schedule planning program for forming on a computer system a print schedule planning system for planning a schedule for printing processes consisting of a series of processes including a machine plate making process for making a machine plate of a printing machine, said print schedule planning program comprising:
obtaining means for obtaining information concerned with the series of processes; and
schedule plan creating means for creating a schedule plan for first half processes in such a manner that a scheduling is performed in accordance with a fastest-schedule scheme for first half processes terminating up to the machine plate making process of the series of processes obtained by said obtaining means, and for creating a schedule plan for latter half processes in such a manner that a scheduling is performed in accordance with a latest-schedule scheme for latter half processes starting after a starting point of the machine plate making process of the series of processes obtained by said obtaining means.

## Patentansprüche

1. Druckablauf-Planungsverfahren zum Planen eines Ablaufs für Druckprozesse, bestehend aus einer Folge von Prozessen einschließlich eines Maschinenplatten-Fertigungsprozesses zum Fertigen einer Maschinenplatte für eine Druckmaschine, wobei das Planungsverfahren folgende Schritte aufweist:
Erhalten von Information über die Folge von Prozessen; und
Erzeugen eines Ablaufplans für erste Halbprozesse in der Weise, dass eine Planung abhängig von einem schnellsten Plänungsschema für erste Halbprozesse durchgeführt wird, die mit dem Maschinenplatten-Fertigungsprozess der Serie von Prozessen des Erhaltungsschritts abschließen, und Erzeugen eines Ablaufplans für spätere Halbprozesse in der Weise, dass eine Planung gemäß einem Abschluss-Planungsschema für spätere Halbprozesse durchgeführt wird, beginnend nach einem Startpunkt des Maschinenplatten-Fertigungsprozesses der Folge von Prozessen, die in dem Erhaltungsschritt erhalten werden.

2. Verfahren nach Anspruch 1, bei dem nach dem Erzeugen des Ablaufplans für die ersten Halbprozesse und des Ablaufplans für die späteren Ablaufprozesse ermittelt wird, ob es eine Überlappung der Abläufe zwischen dem Ablaufplan der ersten Halbprozesse und dem Ablaufplan der späteren Ablaufprozesse gibt.

3. Druckablauf-Planungssystem zum Planen eines Ablaufs für Druckverfahren, bestehend aus einer Folge von Prozessen einschließlich eines Maschinenplatten-Fertigungsprozesses zum Fertigen einer Maschinenplatte einer Druckmaschine, wobei das Druckablauf-Planungssystem aufweist:
eine Erhaltungseinrichtung zum Erhalten von Information über die Folge von Prozessen; und
eine Ablaufplan-Erzeugungseinrichtung zum Erzeugen eines Ablaufplans für erste Halbprozesse in der Weise, dass eine Planung abhängig von einem schnellsten Planungsschema für erste Halbprozesse durchgeführt wird, die mit dem Maschinenplatten-Fertigungsprozess der Serie von Prozessen der Erhaltungseinrichtung abschließen, und Erzeugen eines Ablaufplans für spätere Halbprozesse in der Weise, dass eine Planung gemäß einem Abschluss-Planungsschema für spätere Halbprozesse durchgeführt wird, beginnend nach einem Startpunkt des Maschinenplatten-Fertigungsprozesses der Folge von Prozessen, die in der Erhaltungseinrichtung erhalten werden.

4. System nach Anspruch 3, bei dem die Ablaufplan-Erzeugungseinrichtung eine Überlappungs-Detektoreinrichtung zum Erkennen, ob es eine Überlappung von Abläufen zwischen dem Ablaufplan der ersten Halbprozesse und dem Ablaufplan der späteren Halbprozesse gibt, aufweist.

5. Druckablauf-Planungsprogramm-Speichermedium zum Speichern eines Druckablauf-Planungsprogramms zum Erstellen eines Druckablauf-Planungssystems zum Planen eines Ablaufs für Druckprozesse auf einem Computersystem, bestehend aus einer Folge von Prozessen einschließlich eines Maschinenplatten-Fertigungsprozesses zum Fertigen einer Maschinenplatte einer Druckmaschine, wobei das Druckablauf-Planungsprogramm aufweist:
eine Erhaltungseinrichtung zum Erhalten von Information über die Folge von Prozessen; und
eine Ablaufplan-Erzeugungseinrichtung zum Erzeugen eines Ablaufplans für erste Halbprozesse in der Weise, dass eine Planung abhängig von einem schnellsten Planungsschema für erste Halbprozesse durchgeführt wird, die mit dem Maschinenplatten-Fertigungsprozess der Serie von Prozessen der Erhaltungseinrichtung abschließen, und Erzeugen eines Ablaufplans für spätere Halbprozesse in der Weise, dass eine Planung gemäß einem Abschluss-Planungsschema für spätere Halbprozesse durchgeführt wird, beginnend nach einem Startpunkt des Maschinenplatten-Fertigungsprozesses der Folge von Prozessen, die in der Erhaltungseinrichtung erhalten werden.

## Revendications

1. Procédé de planification de déroulement d'impression consistant à planifier le déroulement de procédures d'impression consistant en une série de procédures comprenant une procédure de fabrication de plaque de machine pour fabriquer une plaque de machine d'une machine à imprimer, ledit procédé de planification de déroulement d'impression comprenant les étapes consistant à :
obtenir des informations relatives à la série de procédures ; et
créer un plan de déroulement d'impression pour une première moitié de procédures de telle sorte qu'une programmation soit exécutée conformément à un premier schéma de déroulement d'impression pour une première moitié de procédures se terminant par la procédure de fabrication de plaque de machine de la série de procédures obtenue au cours de l'étape d'obtention, et créer un plan de déroulement d'impression pour une deuxième moitié des procédures de telle sorte qu'une programmation soit exécutée conformément à un dernier schéma de déroulement d'impression pour une deuxième moitié des procédures qui débute après un point de départ de la procédure de fabrication de plaque de machine de la série de procédures obtenue au cours de l'étape d'obtention.

2. Procédé de planification de déroulement d'impression selon la revendication 1, dans lequel, après la création du plan de déroulement d'impression de la première moitié des procédures et la création du plan de déroulement d'impression de la deuxième moitié des procédures, il est déterminé si il existe - ou non - un chevauchement de programmes entre le plan de déroulement d'impression de la première moitié des procédures et le plan de déroulement d'impression de la deuxième moitié des procédures.

3. Système de planification de déroulement d'impression pour planifier un déroulement de procédures d'impression consistant en une série de procédures comprenant une procédure de fabrication de plaque de machine pour fabriquer une plaque de machine d'une machine à imprimer, ledit système de planification de déroulement d'impression comprenant :
des moyens d'obtention pour obtenir des informations relatives à la série de procédures ; et
des moyens de création de plan de déroulement d'impression pour créer un plan de déroulement d'impression pour une première moitié de procédures de telle sorte qu'une programmation soit exécutée conformément à un premier schéma de déroulement d'impression pour une première moitié de procédures se terminant par la procédure de fabrication de plaque de machine de la série de procédures obtenue par lesdits moyens d'obtention, et pour créer un plan de déroulement d'impression pour une deuxième moitié des procédures de telle sorte qu'une programmation soit exécutée conformément à un dernier schéma de déroulement d'impression pour une deuxième moitié des procédures qui débute après un point de départ de la procédure de fabrication de plaque de machine de la série de procédures obtenue par lesdits moyens d'obtention.

4. Système de planification de déroulement d'impression selon la revendication 3, dans lequel lesdits moyens de création d'un plan de déroulement d'impression possèdent des moyens de détection de chevauchement pour détecter si il existe - ou non - un chevauchement de programmes entre le plan de déroulement d'impression de la première moitié des procédures et le plan de déroulement d'impression de la deuxième moitié des procédures.

5. Support de stockage d'un programme de planification de déroulement d'impression contenant un programme de planification de déroulement d'impression pour former sur un système informatique un système de planification de déroulement d'impression pour planifier le déroulement de procédures d'impression consistant en une série de procédures comprenant une procédure de fabrication de plaque de machine pour fabriquer une plaque de machine d'une machine à imprimer, ledit programme de planification de déroulement d'impression comprenant :
des moyens d'obtention pour obtenir des informations relatives à la série de procédures ; et
des moyens de création de plan de déroulement d'impression pour créer un plan de déroulement d'impression pour une première moitié de procédures de telle sorte qu'une programmation soit exécutée conformément à un premier schéma de déroulement d'impression pour une première moitié de procédures se terminant par la procédure de fabrication de plaque de machine de la série de procédures obtenue par lesdits moyens d'obtention, et pour créer un plan de déroulement d'impression pour une deuxième moitié des procédures de telle sorte qu'une programmation soit exécutée conformément à un dernier schéma de déroulement d'impression pour une deuxième moitié des procédures qui débute après un point de départ de la procédure de fabrication de plaque de machine de la série de procédures obtenue par lesdits moyens d'obtention.
